Europäisches Patentamt

**European Patent Office**

**Office européen des brevets**

(19)

(11) Veröffentlichungsnummer: **0 025 957**
**B1**

(12) **EUROPÄISCHE PATENTSCHRIFT**

(45) Veröffentlichungstag der Patentschrift:
**15.02.84**

(21) Anmeldenummer: **80105489.1**

(22) Anmeldetag: **12.09.80**

(51) Int. Cl.³: **H 04 N 1/036**, G 03 B 27/16,
G 03 G 15/30, G 06 K 15/12

(54) Optische Vorrichtung zum berührungslosen Schreiben, insbesondere zur Faksimilewiedergabe von Bildern und Text.

(30) Priorität: **21.09.79 DE 2938301**

(43) Veröffentlichungstag der Anmeldung:
**01.04.81 Patentblatt 81/13**

(45) Bekanntmachung des Hinweises auf die Patenterteilung:
**15.02.84 Patentblatt 84/7**

(84) Benannte Vertragsstaaten:
**AT BE CH FR GB IT LI LU NL SE**

(56) Entgegenhaltungen:
**DE - A - 1 574 732**
**DE - A - 2 730 788**
**FR - A - 2 390 866**
**US - A - 3 141 105**
**US - A - 3 175 481**
**US - A - 3 581 102**
**US - A - 4 084 895**
**US - A - 4 099 208**

**The Bell System Technical Journal, Vol. 57, Nr. 1, Januar 1978, Seiten 91-97**

(73) Patentinhaber: **SIEMENS AKTIENGESELLSCHAFT,**
**Berlin und München Wittelsbacherplatz 2,**
**D-8000 München 2 (DE)**

(72) Erfinder: **Baues, Peter, Dr., Haydnstrasse 10,**
**D-8033 Krailling (DE)**

## Optische Vorrichtung zum berührungslosen Schreiben, insbesondere zur Faksimilewiedergabe von Bildern und Text

Die vorliegende Erfindung betrifft eine optische Vorrichtung zum berührungslosen Schreiben, insbesondere zur Faksimilewiedergabe von Bildern und Text, bei der blattförmiges Aufzeichnungsmaterial auf eine Trommel gespannt ist oder bei der die Trommel selbst als temporärer Aufzeichnungsträger fungiert.

Aus FR-A-12 390 866 ist eine optische Vorrichtung zum berührungslosen Schreiben, insbesondere zur Faksimilewiedergabe von Bildern und Text, bei der blattförmiges Aufzeichnungsmaterial auf einen Träger gespannt ist oder bei der der Träger selbst als temporärer Aufzeichnungsträger fungiert, vor welchen Träger der einen oder der anderen Art in einem Mindestabstand ein Schreibkopf angeordnet ist, der Lichtwellenleiter in der Form von Glasfasern enthält, in dem die dem Träger zugewandten Lichtaustrittsenden der Lichtwellenleiter linear und dicht gepackt nebeneinander angeordnet sind, und bei dem die Bildinformation, die jeweils durch die Lichtaustrittsenden der Lichtwellenleiter in der Form von Bildpunkten strukturiert wird, mittels entsprechend moduliertem Lichtes den dem Träger abgewandten Lichteintrittsenden der Lichtwellenleiter zuführbar und durch die Lichtwellenleiter übertragbar ist, bekannt. In dieser bekannten optischen Vorrichtung ist vorgesehen, dass die einzelnen Lichtwellenleiter masshaltig in ihrer relativen Lage zueinander fixiert sind, dass weiterhin die lineare Anordnung der Lichtaustrittsenden parallel zu der Achse des Trägers für das Aufzeichnungsmaterial orientiert ist und dass individuelle, entsprechend der jeweils eintreffenden Bildinformation erregbare Lichtquellen vorgesehen sind, die jeweils individuell einem Lichtwellenleiter zugeordnet und räumlich derart angeordnet sind, dass ihre jeweilige Lichtemission auf die Eintrittsenden der Lichtwellenleiter gerichtet ist.

Aus US-A-4 084 895 ist ebenfalls eine optische Vorrichtung zum berührungslosen Schreiben, insbesondere zur Faksimilewiedergabe von Bildern und Text, bekannt, bei der blattförmiges Aufzeichnungsmaterial auf eine Trommel gespannt ist, wobei vor der Trommel ein Lichtwellenleiter aus Glasfasern angeordnet ist, in dem die der Trommel zugewandten Glasfaserenden dicht gepackt nebeneinander angeordnet sind.

Aus «The Bell System Technical Journal», vol. 57 N°1, Januar 1978, Seiten 91–97 ist eine optische Vorrichtung bekannt, bei welcher die einzelnen Lichtwellenleiter (Glasfasern) masshaltig in ihrer relativen Lage zueinander durch zumindest eine mit auf photolithographischem Wege eingeätzten Gräben versehene, aus Halbleitermaterial (z.B. Silizium) bestehende Justierplatte fixiert sind.

Aus US-A-3 175 481 ist eine optische Vorrichtung bekannt, bei der ein Schreibkopf vorgesehen ist, der aus einer Anzahl von Lichtwellenleitern und zwei diese einschliessenden Justierplatten besteht.

Aus US-A-3 141 105 ist eine Justierplatte mit verengender Führung bekannt, bei der Gräben vorgesehen sind, die auf der einer Trommel oder einem Träger allgemein zugewandten Seite einen minimalen Abstand voneinander und auf der der Trommel oder dem Träger abgewandten Seite einen vergrösserten Abstand voneinander aufweisen.

Die derzeit zur Faksimilewiedergabe überwiegend benutzten Geräte arbeiten mit einem elektromechanischen Tintenstrahlsystem unter Verwendung von Normalpapier, auf elektrosensitiver Grundlage mit Schreibnadel und Metallpapier oder ziehen die Elektrolyse in Verbindung mit chemisch präpariertem feuchtem Papier heran. Ein weiteres ebenfalls recht häufig benutztes Prinzip ist die Elektrophotographie, bei der Ladung auf dielektrischem Papier aufgebracht und anschliessend durch Tonerung sichtbar gemacht wird, vgl. z.B. P.Gruppen, H.Karius, H.W.Peters, R.Sommer, K.Maier, D.Preus, E.H.Rittberg: «Stand und Entwicklungstendenzen der Faksimiletechnik», Bundesm. für Forschung und Technologie, Forschungsbericht T77-33, November 1977, insbesondere Seiten 124–125.

Die nach den genannten Prinzipien aufgebauten Geräte sind entweder relativ langsam, haben einen hohen Preis oder sind auf die Verwendung eines Spezialpapiers angewiesen, das wie im Falle des chemisch präparierten Papiers eine schlechte Lagerfähigkeit besitzt. Nachteilig bei den bekannten Geräten ist ausserdem der jeweils hohe Platzbedarf.

Der vorliegenden Erfindung liegt die Aufgabe zugrunde, eine optische Vorrichtung zur berührungslosen Erzeugung von Bildern und Text zu schaffen, die kostengünstig zu realisieren ist und einen geringen Platzbedarf hat, so dass sie zusammen mit dem Gerät, in dem sie angeordnet ist, einen Gesamtplatzbedarf hat, der etwa dem Platzbedarf einer herkömmlichen Schreibmaschine entspricht.

Die der Erfindung zugrundeliegende Aufgabe wird durch eine optische Vorrichtung zum berührungslosen Schreiben von Bildern und Text gelöst, bei der blattförmiges Aufzeichnungsmaterial auf einen Träger gespannt ist oder bei der der Träger selbst als temporärer Aufzeichnungsträger fungiert, vor welchem Träger der einen oder der anderen Art in einem Mindestabstand ein Schreibkopf angeordnet ist, der Lichtwellenleiter in der Form von Glasfasern enthält, in dem die dem Träger zugewandten Lichtaustrittsenden der Lichtwellenleiter linear und dicht gepackt nebeneinander angeordnet sind, und bei dem die Bildinformation, die jeweils durch die Lichtaustrittsenden der Lichtwellenleiter in der Form von Bildpunkten strukturiert wird, mittels entsprechend moduliertem Lichtes den den Trägern abgewandten Lichteintrittsenden der Lichtwellenleiter zuführbar und durch die Lichtwellenleiter übertragbar ist, wobei die einzelnen Lichtwellenleiter masshaltig in ihrer relativen Lage zueinander fixiert sind, wobei die lineare Anordnung der Lichtaustrittsenden parallel zu der Achse des Trägers für das Aufzeichnungsmaterial orientiert ist und wobei individuelle, entsprechend der jeweils eintreffenden Bildinformation erregbare Lichtquellen vorgesehen sind, die jeweils individuell einem Lichtwellenleiter zugeordnet und räumlich derart angeordnet sind, dass ihre jeweilige Lichtemmission auf die Eintrittsenden der Lichtwellenleiter gerichtet ist.

Die erfindungsgemässe optische Vorrichtung ist dadurch gekennzeichnet, dass der Träger für das Aufzeichnungsmaterial eine Trommel ist, dass die einzelnen Lichtwellenleiter durch zumindest eine an sich bekannte, mit auf photolithographischem Wege eingeätzten Gräben versehene, vorzugsweise aus Halbleitermaterial bestehende Justierplatte fixiert sind, dass der Schreibkopf aus einer Anzahl von Lichtwellenleitern und zwei diese einschliessenden Justierplatten besteht, dass die beiden Justierplatten zusammen mit den von ihnen umschlossenen Lichtwellenleitern verklebt sind, dass die trommelseitige Schreibkopffläche, die die Lichtaustrittsenden der Lichtwellenleiter aufweist, entsprechend dem gegebenen Trommelradius so geformt und bearbeitet ist, dass sie eine konkave, reibungsarme Fläche als Nachbildung des Zylindermantels der Trommel mit einem um einen Mindestabstand beider Oberflächen voneinander vergrösserten Radius darstellt, dass die der Trommel abgewandte, die Lichteintrittsenden der Lichtwellenleiter aufweisende Seite des Schreibkopfes mit einer Lichtquellenzeile derart verbunden ist, dass die Lichtemission einer individuellen Lichtquelle auf das Lichteintrittsende des ihr zugeordneten Lichtwellenleiters gerichtet ist, dass die Lichtquellenzeile mit einer die notwendigen Lichtquellenanschlüsse enthaltenden Verbindungsvorrichtung, vorzugsweise einer Stekkerleiste, verbunden ist und dass der Gesamtaufbau des Schreibkopfes zusammen mit einer Befestigungsvorrichtung zu einer monolithischen Anordnung, die vorzugsweise kunstharzvergossen ist, zusammengefasst ist.

Die erfindungsgemässe optische Vorrichtung bietet den Vorteil, dass eine kostengünstige, platzsparende Vorrichtung zur Faksimilewiedergabe realisierbar ist.

Weiterbildungen der Erfindung sind durch die in den abhängigen Patentansprüchen angegebenen Merkmale gekennzeichnet.

Im folgenden wird die Erfindung an Hand mehrerer Figuren, die Ausführungsbeispiele für die Erfindung betreffen, erläutert.

Fig. 1 zeigt schematisch die Anordnung einer Trommel 1 mit einer davor positionierten linearen Anordnung von Lichtwellenleitern 2.

Fig. 2 zeigt auszugsweise einen Schreibkopf, bei dem eine Anzahl von Lichtwellenleitern 2 nebeneinander in Gräben von zwei zusammengefügten symmetrischen Einschicht-Justierplatten 3 gepackt sind.

Fig. 3 zeigt ein weiteres Ausführungsbeispiel für einen Teil eines Schreibkopfes, bei dem eine Anzahl von Lichtwellenleitern 2 in tiefenmässig an die Durchmesser der Lichtwellenleiter 2 angepassten Gräben einer Grabenplatte 4 liegen, die ihrerseits durch eine Deckplatte 5 abgedeckt ist.

Fig. 4 zeigt schematisch die Anordnung eines Schreibkopfes 6 vor der gedachten Achse einer Trommel, bei welchem Schreibkopf eine Lichtquellenzeile 7 mit Lichtquellenanschlüssen 8 vorgesehen ist. Die einzelnen Lichtquellen sind in dem gezeigten Ausführungsbeispiel als lichtemittierende Dioden LED 9 realisiert, deren Lichtemission jeweils auf die Lichteintrittsenden der jeweils zugeordneten Lichtwellenleiter 2 gerichtet ist. Die lichtemittierenden Dioden LED werden in einer Zeile mit Hilfe der Halbleitertechnologie integriert und auf einem Chip aufgebaut.

Fig. 5 zeigt eine Frontansicht des Schreibkopfes 6, bei dem die Anordnung der Lichtwellenleiter 2 mit den Justierplatten und die Lichtquellenzeile 7 gezeigt ist.

Fig. 6 zeigt das Ausführungsbeispiel für eine Weiterbildung der Erfindung, bei dem ein sog. Multischreibkopf 12, bestehend aus Einzelschreibköpfen 11, die voneinander durch Haltestege 10 getrennt sind, verwendet wird.

Fig. 7 zeigt schematisch die Draufsicht einer Justierplatte mit verengender Führung 13, bei der die Gräben 14 trommelseitig einen engen und lichtquellenseitig einen weiten Abstand aufweisen.

Fig. 8 zeigt ein Ausführungsbeispiel für eine andere Weiterbildung der Erfindung, bei dem die Lichtwellenleiter 2 in zwei Lagen durch zwei Zweischichten-Justierplatten 15 mit untereinander versetzten Gräben gefasst sind.

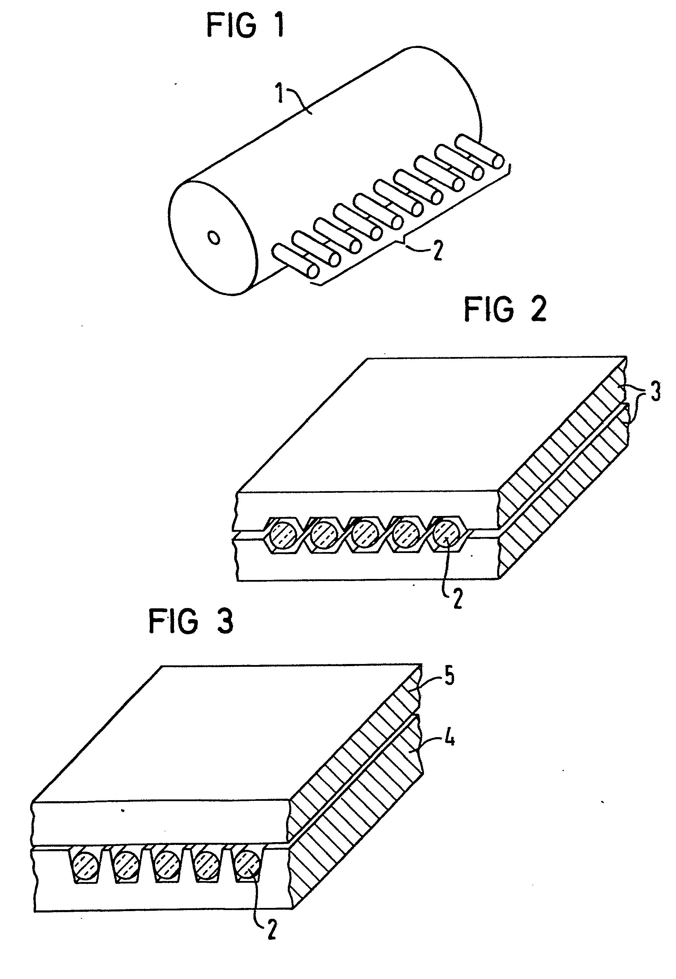

Wie bereits erläutert, zeigt Fig. 1 schematisch die Anordnung einer Trommel 1 mit einer Reihe von vor der Trommel stehenden Lichtwellenleitern 2. Wie ebenfalls bereits erläutert, bezieht sich die vorliegende Erfindung auf zwei verschiedene Schreibprinzipien, nämlich dem Prinzip der Elektrophotographie oder der Photographie. Die Elektrophotographie kann dabei nach Art des vollflächigen elektrischen Beladens entweder von ZnO Papier oder einer Se- bzw. $As_2Se_3$-Trommel mit nachfolgendem partiellen Entladen durch Licht und Tonerung benutzt werden, wobei im Falle der Trommel ein anschliessender Umdruck auf Normalpapier vorgenommen wird. Das partielle Entladen durch Licht geschieht mit Hilfe der weiter unten beschriebenen erfindungsgemässen optischen Vorrichtung.

Der bei der Elektrophotographie erforderliche partielle Entladungsvorgang geschieht mit einer Lichtwellenleiterzeile, die vor der Trommel 1 in Achsrichtung angeordnet ist. Die Lichtwellenleiter 2 liegen direkt nebeneinander, z.B. in einer Packungsdichte von 8 Stück pro 1 mm. Für die Schmalseite eines DIN-A-4 Blattes sind bei dieser Auflösung 1728 Lichtwellenleiter erforderlich. Es kommen Lichtwellenleiter mit Stufenindex- oder Gradientenindexprofil in Frage.

Die genaue masshaltige Anordnung der Lichtwellenleiter 2 wird mit Hilfe von Justierplatten, vgl. Fig. 2 und 3, vorgenommen. Diese Justierplatten bestehen z.B. aus Halbleitermaterial wie Si, GaAs oder GaP, in die durch photolithographische Techniken Gräben eingeätzt werden. Das Herstel-

len solcher Grabenplatten ist an sich bekannt, vgl. z.B. The Bell System Technical Journal, Vol. 57, No. 1, Jan. 1978, S. 91–97: C.M. Schroeder: «Accurate Silicon Spacer Chip for an Optical-Fiber Cable Connector».

Es können auch andere Materialien für die Justierplatten Verwendung finden. Dementsprechend müssen andere Verfahren zur Herstellung der Gräben herangezogen werden.

Die Fig. 2 und 3 stellen zwei verschiedene Methoden zur Fassung der Lichtwellenleiter 2 dar. Fig. 2 zeigt zwei Einschicht-Justierplatten 3 mit genau gleicher Grabenstruktur. Fig. 3 zeigt eine Grabenplatte 4 mit Gräben, die auch tiefenmässig den Durchmessern der Lichtwellenleiter 2 angepasst sind. Auf die Grabenplatte 4 wird nach dem Einlegen der Lichtwellenleiter 2 eine Deckplatte 5 gelegt.

Die Justierplatten werden nach Einlegen der Lichtwellenleiter 2 in die Gräben vorzugsweise mit Kunstharz zusammengeklebt. Sie bilden daraufhin einen festen Block, der weiter bearbeitet werden kann. Diese weitere Bearbeitung sieht vor, dass der feste Block senkrecht zu den Lichtwellenleitern 2 an seinem vorderen und seinem hinteren Ende abgeschnitten wird. Die Schnittflächen werden poliert. Eine der beiden Schnittflächen steht später der elektrophotographischen Trommel 1 gegenüber. Auf die andere Fläche wird eine Lichtquellenzeile 7 gesetzt, deren Lichtquellen untereinander den gleichen Abstand wie die Lichtwellenleiter 2 in den Justierplatten haben. Die Lichtquellen stehen den Lichteintrittsenden der Lichtwellenleiter 2 derart gegenüber, dass ihre Lichtemission auf diese Lichteintrittsenden gerichtet ist.

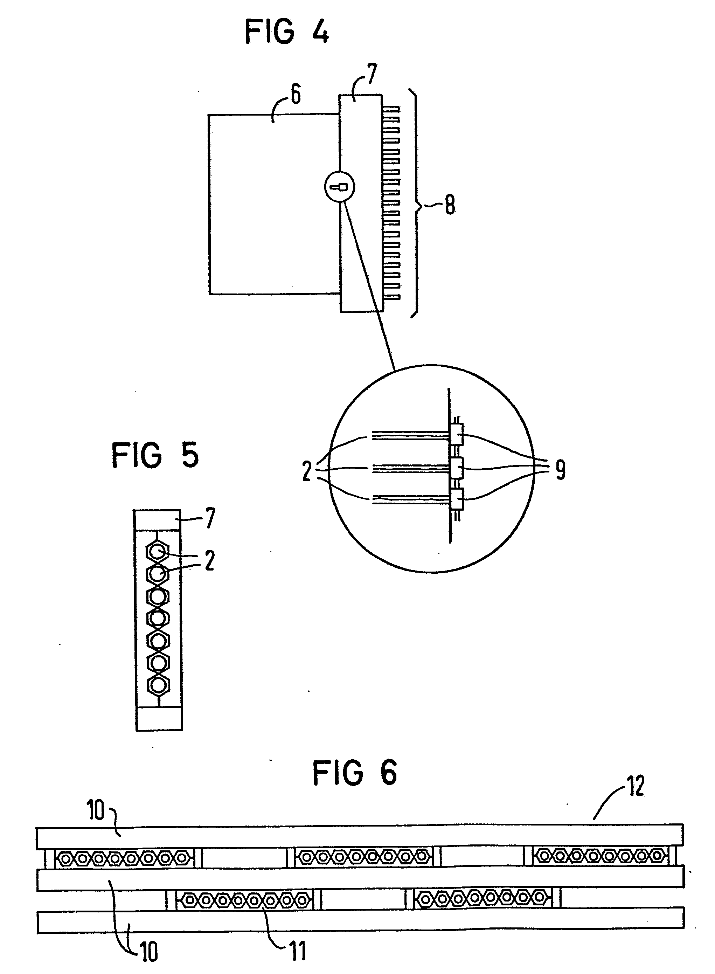

Die Lichtquellen können als Glühlampen, als Halbleiterlaserdioden oder als lichtemittierende Dioden LED 9 realisiert sein. Die Halbleiterlaserdioden wie auch die lichtemittierenden Dioden LED können dabei als Einzelelemente oder aber vorzugsweise zu mehreren in einer Zeile mit Hilfe der Halbleitertechnologie auf einem Halbleiter-Chip integriert sein. Die Lichtintensität der Lichtquellen wird entsprechend dem zu erzeugenden Druckbild elektrisch moduliert. Die Justierplatten zur Umfassung der Lichtwellenleiter 2 und die daran angeordnete Lichtquellenzeile 7 werden zusammen mit einer entsprechend der Lichtquellenanzahl vielpoligen Verbindungsvorrichtung, vorzugsweise einer Steckerleiste, in Kunstharz vergossen. Diese Anordnung bildet einen Einzelschreibkopf. Infolge der flächenmässigen Begrenzungen photolithographischer Techniken kann er nur einen Teil der insgesamt benötigten 1728 Lichtwellenleiter aufnehmen. Es ist deshalb eine Kombinationstechnik erforderlich, mit der mehrere Einzelschreibköpfe 11 zu einem sog. Multischreibkopf 12 zusammengefügt werden können. Fig. 6 zeigt ein Ausführungsbeispiel für einen derartigen Multischreibkopf 12. Es ist gezeigt, dass mehrere Einzelschreibköpfe 11 zwischen Haltestegen 10, in Fig. 6 drei Stück, versetzt angeordnet sind. Die Haltestege 10 bestehen z.B. aus einem Kunststoffmaterial. Die Gesamtanordnung wird kunstharzvergossen. Falls erforderlich, können mehr als zwei Reihen von Einzelschreibköpfen 11 zwischen einer entsprechend grossen Anzahl von Haltestegen 10 in versetzter Anordnung fixiert werden. Fig. 6 zeigt die der elektrophotographischen Trommel 1 zugewandte Seite. Die Anordnung der Einzelschreibköpfe 11 in mehreren Zeilen macht entsprechend der Umdrehungsgeschwindigkeit der Trommel eine zeitlich versetzte Ansteuerung der aufeinanderfolgenden Zeilen von Einzelschreibköpfen 11 erforderlich. Der zeitliche Abstand der Zeilenansteuerung resultiert aus der Umdrehungsgeschwindigkeit der Trommel 1. Er kann durch eine geeignete Mikrocomputer-Steuerung realisiert werden.

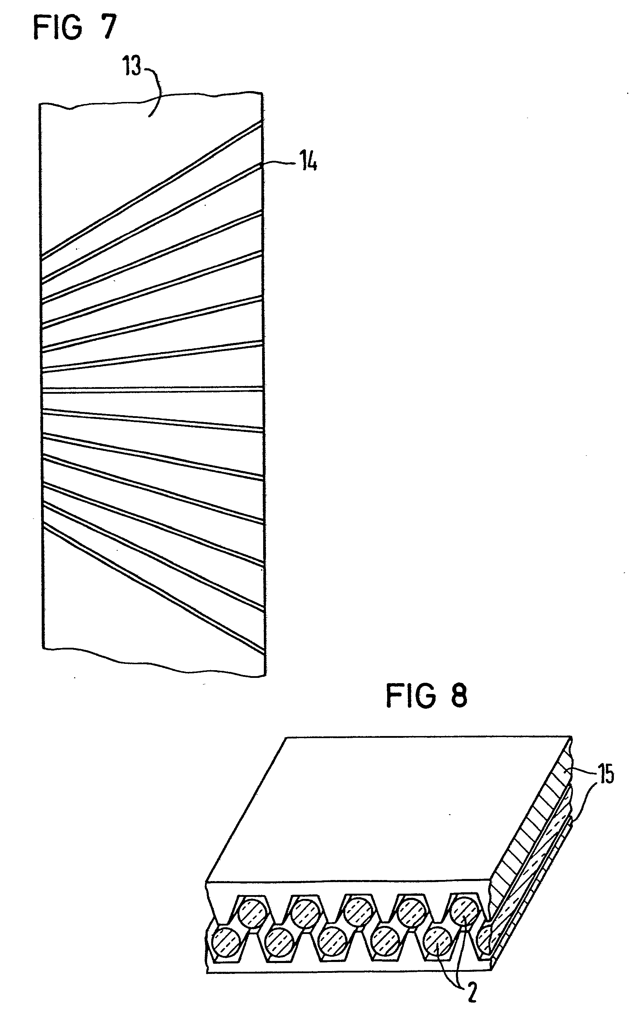

Zur Herstellung der Einzelschreibköpfe 11 sind Justierplatten mit eingeätzten Gräben erforderlich. Diese Gräben zum Einlegen der Lichtwellenleiter müssen nicht parallel zueinander verlaufen. Eine abweichende Anordnung der Gräben kann erforderlich werden, wenn die Packungsdichte der Lichtwellenleiter 2 gegenüber dem Aufzeichnungsmedium, nämlich der elektrophotographischen Trommel 1 bzw. dem photoempfindlichen Papier, grösser als die vorgegebene Packungsdichte der Lichtquellen sein muss. Für diesen Fall ist ein Verlauf der Gräben 14 in einer Justierplatte mit verengender Führung 13 in Fig. 7 dargestellt.

Eine vorteilhafte Weiterbildung der Erfindung sieht vor, dass die Lichtwellenleiter 2 in zwei Lagen mittels zweier Zweischicht-Justierplatten 15 lagenmässig gegeneinander versetzt und überlappend gefasst sind. Eine solche Anordnung hat den Vorteil, dass die Lichtwellenleiter einen grösseren Durchmesser als bei einer einlagigen Anordnung haben können, wodurch die Überlappung, die eine Streifenbildung auf dem Aufzeichnungsmaterial verhindert, ermöglicht ist.

**Patentansprüche**

1. Optische Vorrichtung zum berührungslosen Schreiben, insbesondere zur Faksimilewiedergabe von Bildern und Text, bei der blattförmiges Aufzeichnungsmaterial auf einen Träger gespannt ist oder bei der der Träger selbst als temporärer Aufzeichnungsträger fungiert, vor welchem Träger der einen oder der anderen Art in einem Mindestabstand ein Schreibkopf (6) angeordnet ist, der Lichtwellenleiter (2) in der Form von Glasfasern enthält, in dem die dem Träger zugewandten Lichtaustrittsenden der Lichtwellenleiter (2) linear und dicht gepackt nebeneinander angeordnet sind, und bei dem die Bildinformation, die jeweils durch die Lichtaustrittsenden der Lichtwellenleiter (2) in der Form von Bildpunkten strukturiert wird, mittels entsprechend modulierten Lichtes den den Trägern abgewandten Lichteintrittsenden der Lichtwellenleiter (2) zuführbar und durch die Lichtwellenleiter (2) übertragbar ist, wobei die einzelnen Lichtwellenleiter (2) masshaltig in ihrer relativen Lage zueinander fixiert sind, wobei die lineare Anordnung der Lichtaustrittsenden parallel zu der Achse des Trägers für das Aufzeichnungsmaterial orientiert ist und wobei individuelle, entsprechend der jeweils eintreffenden Bildinformation erregbare Lichtquellen vorgesehen sind, die jeweils individuell einem Lichtwellenleiter (2) zugeordnet und räumlich derart angeordnet sind, dass ihre jeweilige Lichtemission auf die Eintrittsenden der Lichtwellenleiter (2) gerichtet ist, dadurch gekennzeichnet, dass der Träger für das Aufzeichnungsmaterial eine Trommel (1) ist, dass die einzelnen Lichtwellenleiter (2) durch zumindest eine an sich bekannte, mit auf photolithographischem Wege eingeätzten Gräben (14) versehene, vorzugsweise aus Halbleitermaterial bestehende Justierplatte (3, 4, 15) fixiert sind, dass der Schreibkopf (6) aus einer Anzahl von Lichtwellenleitern (2) und zwei diese einschliessenden Justierplatten besteht, dass die beiden Justierplatten zusammen mit den von ihnen umschlossenen Lichtwellenleitern (2) verklebt sind, dass die trommelseitige Schreibkopffläche, die die Lichtaustrittsenden der Lichtwellenleiter (2) aufweist, entsprechend dem gegebenen Trommelradius so geformt und bearbeitet ist, dass sie eine konkave, reibungsarme Fläche als Nachbildung des Zylindermantels der Trommel (1) mit einem um einen Mindestabstand beider Oberflächen voneinander vergrösserten Radius darstellt, dass die der Trommel (1) abgewandte, die Lichteintrittsenden der Lichtwellenleiter (2) aufweisende Seite des Schreibkopfes (6) mit einer Lichtquellenzeile (7) derart verbunden ist, dass die Lichtemission einer individuellen Lichtquelle auf das Lichteintrittsende des ihr zugeordneten Lichtwellenleiters (2) gerichtet ist, dass die Lichtquellenzeile (7) mit einer die notwendigen Lichtquellenanschlüsse (8) enthaltenden Verbindungsvorrichtung, vorzugsweise einer Steckerleiste, verbunden ist und dass der Gesamtaufbau des Schreibkopfes (6) zusammen mit einer Befestigungsvorrichtung zu einer monolithischen Anordnung, die vorzugsweise kunstharzvergossen ist, zusammengefasst ist.

2. Optische Vorrichtung nach Anspruch 1, dadurch gekennzeichnet, dass der Schreibkopf (6) aus einer Anzahl von Lichtwellenleitern (2) und zwei diese umschliessenden Zweischicht-Justierplatten (15) besteht, bei dem die verwendeten Lichtwellenleiter (2) in zwei Lagen übereinander sich überlappend und in seitlich gegeneinander versetzten Gräben (14) eingebettet gepackt sind, dass die beiden Zweischicht-Justierplatten (15) zusammen mit den von ihnen umschlossenen Lichtwellenleitern (2) verklebt sind, dass die trommelseitige Schreibkopffläche, die die Lichtaustrittsenden der Lichtwellenleiter (2) aufweist, entsprechend dem gegebenen Trommelradius so geformt und bearbeitet ist, dass sie eine konkave, reibungsarme Fläche als Nachbildung des Zylindermantels der Trommel (1) mit um einen Mindestabstand beider Oberflächen voneinander vergrösserten Radius darstellt, dass die der Trommel (1) abgewandte, die Lichteintrittsenden der Lichtwellenleiter (12) aufweisende Seite des Schreibkopfes (6) mit einer Lichtquellenzeile (7) derart verbunden ist, dass jeweils die Lichtemission einer individuellen Lichtquelle auf das Lichteintrittsende des ihr zugeordneten Lichtwellenleiters (2) gerichtet ist, dass die Lichtquellenzeile (7) mit einer die notwendigen elektrischen Lichtquellenanschlüsse (8) enthaltenden Verbindungsvorrichtung, vorzugsweise einer Steckerleiste, verbunden ist und dass der Gesamtaufbau des Schreibkopfes (6) zusammen mit einer Befestigungsvorrichtung zu einer monolithischen Anordnung, die vorzugsweise kunstharzvergossen ist, zusammengefasst ist.

3. Optische Vorrichtung nach einem der vorhergehenden Ansprüche, dadurch gekennzeichnet, dass mehrere Einzelschreibköpfe (11) derart zu einem Multischreibkopf (12) zusammengefasst sind, dass die Einzelschreibköpfe (11) in zumindest zwei Lagen, durch vorzugsweise aus einem Kunststoffmaterial bestehende Haltestege (10) voneinander getrennt, jeweils in jeder Lage mit einem Abstand voneinander, sich in der Gesamtanordnung jedoch ausnahmslos überlappend, angeordnet sind.

4. Optische Vorrichtung nach Anspruch 3, dadurch gekennzeichnet, dass der Multischreibkopf (12) in seiner Länge der Länge der vorgegebenen Zeilen der aufzuzeichnenden Bilder und/oder des Texts angepasst ist.

5. Optische Vorrichtung nach Anspruch 3 oder 4, dadurch gekennzeichnet, dass der Multischreibkopf (12) eine Vielzahl von Lagen aufweist, so dass die Gesamtheit der Lichtaustrittsenden aller Lichtwellenleiter (2) zumindest zwei Zeilen des betreffenden aufzuzeichnenden Bildes repräsentiert.

6. Optische Vorrichtung nach einem der Ansprüche 3 bis 5, dadurch gekennzeichnet, dass die Lichtquellen entsprechend ihrer Zuordnung zu den Lichtwellenleitern (2) und entsprechend der Umdrehungszahl der Trommel (1) zeitlich versetzt erregt werden.

7. Optische Vorrichtung nach Anspruch 6, dadurch gekennzeichnet, dass die zeitlich versetzte Erregung der betreffenden Lichtquellen mittels einer Mikrocomputer-Anordnung oder eines Mikroprozessors steuerbar ist.

8. Optische Vorrichtung nach einem der Ansprüche 1 bis 2, dadurch gekennzeichnet, dass die Justierplatten (3, 4, 15) als Justierplatten mit verengender Führung (13) realisierbar sind, bei denen die Gräben (14) auf der der Trommel (1) zugewandten Seite einen minimalen Abstand voneinander und auf der der Trommel (1) abgewandten Seite einen vergrösserten Abstand voneinander aufweisen, so dass trotz eines jeweils grösseren Querschnittsdurchmessers einer betreffenden Lichtquelle im Vergleich zu dem Querschnittsdurchmesser eines betreffenden Lichtwellenleiters (2) eine maximale Packungsdichte und damit eine maximale Auflösung der zu übertragenden Bild- oder Textinformation erreichbar ist.

9. Optische Vorrichtung nach einem der Ansprüche 1 bis 2, dadurch gekennzeichnet, dass zum Umschliessen der Lichtwellenleiter (2) jeweils zwei Justierplatten (3, 4, 15) mit gleicher Grabenstruktur und gleichen Grabenverläufen mit ihren grabenseitigen Flächen übereinandergelegt werden.

10. Optische Vorrichtung nach einem der Ansprüche 1 bis 2, dadurch gekennzeichnet, dass zum Umschliessen der Lichtwellenleiter (2) jeweils eine Grabenplatte (4) mit einer auch tiefenmässig den Durchmessern der Lichtwellenleiter (2) angepassten Grabenstruktur und eine plane Deckplatte (5) übereinandergelegt sind.

11. Optische Vorrichtung nach einem der Ansprüche 1 bis 2, dadurch gekennzeichnet, dass die Lichtwellenleiter (2) ein Stufenindexprofil haben.

12. Optische Vorrichtung nach einem der Ansprüche 1 bis 2, dadurch gekennzeichnet, dass die Lichtwellenleiter (2) ein Gradientenindexprofil haben.

13. Optische Vorrichtung nach einem der Ansprüche 1 bis 8, dadurch gekennzeichnet, dass die Lichtquellen als Glühlampen realisiert sind.

14. Optische Vorrichtung nach einem der Ansprüche 1 bis 8, dadurch gekennzeichnet, dass die Lichtquellen als lichtemittierende Dioden LED (9) realisiert sind.

15. Optische Vorrichtung nach einem der vorhergehenden Ansprüche, dadurch gekennzeichnet, dass die Lichtquellen als Halbleiterlaserdioden realisiert werden.

16. Optische Vorrichtung nach einem der Ansprüche 1 bis 8 und 14, dadurch gekennzeichnet, dass die lichtemittierenden Dioden LED (9) zu mehreren in einer Lichtquellenzeile (7) mit Hilfe der Halbleitertechnologie auf einem Chip eines geeigneten Halbleitermaterials integriert sind.

17. Optische Vorrichtung nach einem der Ansprüche 1 bis 8 und 15, dadurch gekennzeichnet, dass die Halbleiterlaserdioden zu mehreren in einer Lichtquellenzeile (7) mit Hilfe der Halbleitertechnologie auf einem Chip eines geeigneten Halbleitermaterials integriert sind.

18. Optische Vorrichtung nach einem der Ansprüche 1 bis 2 oder 8, dadurch gekennzeichnet, dass das Halbleitermaterial Si ist.

19. Optische Vorrichtung nach einem der Ansprüche 1 bis 2 oder 8, dadurch gekennzeichnet, dass das Halbleitermaterial GaAs ist.

20. Optische Vorrichtung nach einem der Ansprüche 1 bis 2 oder 8, dadurch gekennzeichnet, dass das Halbleitermaterial GaP ist.

**Claims**

1. An optical device for non-contact recording, in particular for the facsimile reproduction of pictures and text, in which record material in the form of sheets is stretched on a carrier, or in which the carrier itself functions as a temporary record carrier, in front of which carrier of the one or other type, a printing head (6) is arranged at a minimum distance, which printing head comprises light waveguides (2) in the form of glass fibres, and in which carrier the light emergence ends of the light waveguides (2), which face towards the carrier, are side-by-side in a line and densely packed; in which the image information, which is structured at any particular time in the form of image points by way of the light emergence ends of the light waveguides (2), can be supplied by means of appropriately modified light to the light input ends of the light waveguides (2) facing away from the carrier, and can be transmitted through the light waveguides (2); in which the individual light waveguides (2) are accurately fixed in their relative position with respect to one another; wherein the linear arrangement of the light emergence ends is orientated parallel to the axis of the carrier for the record material; and wherein individual light sources which are excitable in accordance with the particular incoming image information, are individually assigned to a light waveguide (2) and spatially arranged in such a manner that their respective emitted light is directed to the input ends of the light waveguides (2), characterised in that the carrier for the record material is a drum (1); that the individual light waveguides (2) are fixed by means of at least one adjusting plate (3, 4, 15), known per se, which is provided with photolithographically etched grooves (14), and which preferably consists of semiconductor material; that the recording head (6) consists of a number of light waveguides (2) and two adjusting plates enclosing the latter; that the two adjusting plates, with the light waveguides (2) enclosed therein, are stuck together; that the recording head surface at the drum end which displays the light emergence ends of the light waveguides (2), is so formed and machined in accordance with the given drum radius that it presents a concave, low-friction surface which is a reproduction of the cylinder casing of the drum (1) having a radius which is increased by a minimum spacing of the two surfaces from one another; that the side of the recording head (6) which faces away from the drum (1) and which has the light input ends of the light waveguides (2) is so connected to a row (7) of light sources that the light emitted by an individual light source is directed to the light input end of the light waveguide (2) assigned to that light source; that the row (7) of light sources is connected to a connecting means, preferably a plug strip, which include the necessary light source terminals (8); and that the total structure of the recording head (6), together with a fixing device, are combined to form a monolithic arrangement, preferably cast from synthetic resin.

2. An optical device according to Claim 1, characterised in that the recording head (6) consists of a number of light waveguides (2) and two two-layer adjusting plates (15) enclosing the light waveguides, in which the light waveguides (2) used are packed in two layers one above another so as to overlap and to be embedded in two laterally staggered grooves (14); that the two two-layer adjusting plates (15), with the light waveguides (2) enclosed thereby, are stuck together; that the recording head surface at the drum end which displays the light emergence ends of the light waveguides (2) are so formed and machined in accordance with the given drum radius that it presents a concave, low-friction surface which is a reproduction of the cylinder casing of the drum (1) having a radius which is increased by a minimum spacing of the two surfaces from one another; that the side of the recording head (6) which faces away from the drum (1) and which has the light input ends of the light waveguides (12) is so connected to a row (7) of light sources; that the light emitted by an individual light source is directed to the light input end of the light waveguide (2) assigned thereto; that the row of light sources is connected to a connecting device, preferably a plug strip, which includes the necessary electrical light source terminals (8); and that the total structure of the recording head (6), together with a fastening device, are combined to form a monolithic arrangement which is preferably cast from synthetic resin.

3. An optical device according to one of the preceding Claims, characterised in that a plurality of individual recording heads (11) are so combined to form a multi-recording head (12); that the individual recording heads (11) are arranged in at least two layers and are separated from one another by holding rods (10), which preferably consist of a synthetic resin, and are spaced from one another in each position but overlap one another without exception in the overall arrangement.

4. An optical device according to Claim 3, characterised in that the length of the multirecording head (12) is matched to the length of the given lines of the pictures and/or text to be recorded.

5. An optical device according to Claim 3 or Claim 4, characterised in that the multi-recording head (12) has a plurality of layers, so that the totality of the light emergence ends of all the light waveguides (2) represents at least two lines of the particular image to be recorded.

6. An optical device according to one of Claims 3 to 5, characterised in that the light sources are excited in accordance with their assignment to the light waveguides (2), and in accordance with the number of revolutions of the drum (1) in a timewise-staggered fashion.

7. An optical device according to Claim 6, characterised in that the timewise-staggered excitation of the respective light sources is controllable by means of a microcomputer arrangement or a microprocessor.

8. An optical device according to one of Claims 1 to 2, characterised in that the adjusting plates (3, 4, 15) are formed as adjusting plates (13) having a convergent guidance and in which the grooves (14) have a minimal distance from one another at the side facing the drum (1) and an increased spacing from one another on the side facing away from the drum (1), so that despite a respectively larger cross-sectional diameter of a particular light source in comparison with the cross-sectional diameter of a particular light waveguide (2), a maximum packing density and thus a maximum resolution of the picture or text information to be transmitted, can be achieved.

9. An optical device according to one of Claims 1 to 2, characterised in that in order to enclose the light waveguides (2), two adjusting plates (3, 4, 15) having the same groove structure and the same groove patterns are superposed at their grooved surfaces.

10. An optical device according to one of Claims 1 to 2, characterised in that in order to enclose the light waveguides (2), a groove plate (4) having a groove structure, which is matched to the diameter of the light waveguides (2), even in respect of depth, and a plane cover plate (5) are superposed.

11. An optical device according to one of Claims 1 to 2, characterised in that the light waveguides (2) have a stepped index profile.

12. An optical device according to one of Claims 1 to 2, characterised in that the light waveguides (2) have a sloping index profile.

13. An optical device according to one of Claims 1 to 8, characterised in that the light sources are in the form of incandescent lamps.

14. An optical device according to one of Claims 1 to 8, characterised in that the light sources are in the form of light-emitting diodes LED (9).

15. An optical device according to one of the preceding Claims, characterised in that the light sources are in the form of semiconductor laser diodes.

16. An optical device according to one of Claims 1 to 14, characterised in that the light-emitting diodes LED (9) are integrated on a chip of a suitable semiconductor material using semiconductor technique, as a plurality in a light source row (7).

17. An optical device according to one of Claims 1 to 8 and 15, characterised in that the semiconductor laser diodes are integrated on a chip of a suitable semiconductor material using semiconductor technique, as a plurality in a light source row (7).

18. An optical device according to one of Claims 1 to 2 or 8, characterised in that the semiconductor material is Si.

19. An optical device according to one of Claims 1 to 2 or 8, characterised in that the semiconductor material is GaAs.

20. An optical device according to one of Claims 1 to 2 or 8, characterised in that the semiconductor material is GaP.

**Revendications**

1. Dispositif optique pour l'écriture, sans contact, en particulier pour la reproduction facsimilé d'images et de textes, dans lequel le matériau d'enregistrement se présentant sous la forme d'une feuille, est tendu sur un support, ou dans lequel le support lui-même fait fonction de support d'enregistrement temporaire, support d'enregistrement, de l'un ou de l'autre genre, à l'avant duquel est disposée, à une distance minimale, une tête d'écriture (6) qui comporte des guides d'ondes de lumière (2) sous la forme de fibres de verre et dans laquelle les extrémités des guides d'ondes de lumière (2) qui sont dirigées vers le support, sont disposées linéairement les unes près des autres selon un agencement compact, et dans lequel l'information d'image qui est structurée, par les extrémités de sortie de la lumière des guides d'ondes de lumière (2), sous la forme des points d'images, est susceptible d'être transmise, à l'aide d'une lumière modulée de façon correspondante, aux extrémités d'entrée des guides d'ondes de lumière (2), qui sont situées du côté opposé au support, et est susceptible d'être transmise par les guides d'ondes de lumière (2), les différents guides d'ondes de lumière (2) étant fixés dans des positions de distance relative entre elles et la disposition linéaire des extrémités de sortie de la lumière étant orientée parallèlement à l'axe du support pour le matériau d'enregistrement, alors que sont prévues des sources de lumière individuelles, susceptibles d'être excitées en fonction de l'information d'image qui se présente, lesdites sources de lumière respectives étant associées individuellement à un guide d'ondes de lumière (2) et étant disposées spatialement de façon que leurs émissions de lumière respectives soient dirigées sur les extrémités d'entrée des guides d'ondes de lumière (2), caractérisé par le fait que le support pour le matériau d'enregistrement est un tambour (1), que les divers guides d'ondes de lumière sont fixés par au moins une plaque d'ajustage (3, 4, 15), connue en soi, de préférence en un matériau semiconducteur et pourvue de gorges (14) gravées par voie photolithographique, que la tête d'écriture (6) est constituée par plusieurs guides d'ondes de lumière (2) et par deux plaques d'ajustage les enfermant, que les deux plaques d'ajustage sont collées aux guides d'ondes de lumière (2) qu'elles enferment, que la surface de la tête d'écriture, qui est située du côté du tambour et qui présente les extrémités de sortie des guides d'ondes de lumière (2), est conformée et traitée, en fonction du rayon donné du tambour, de manière à présenter une surface concave, à faible friction et représentant la surface latérale du tambour (1), avec un rayon augmenté d'une distance minimale des deux surfaces entre elles, que le côté de la tête d'écriture (6) qui est éloigné du tambour (1), et qui est pourvu des extrémités d'entrée de la lumière des guides d'ondes de lumière (2), est relié de telle façon à une rangée (7) de source lumineuse, que l'émission lumineuse d'une source de lumière individuelle est dirigée sur l'extrémité d'entrée de lumière du guide d'ondes de lumière (2) qui lui est associée, que la ligne (7) de sources de lumière est reliée à un dispositif de liaison, de préférence une réglette à enfichage, contenant les bornes de raccordement (8) nécessaires aux sources lumineuses, et que la constitution d'ensemble de la tête d'écriture (6) est assemblée avec un dispositif de fixation pour former un dispositif monolithique qui est de préférence enrobé de résine synthétique moulée.

2. Dispositif optique selon la revendication 1, caractérisé par le fait que la tête d'écriture (6) est constituée par un certain nombre de guides d'ondes de lumière (2) et par deux plaques d'ajustage à double couche (15) qui les enserrent, dans lesquelles les guides d'ondes de lumière (2) qui sont utilisés, sont logés de façon compacte, suivant deux couches superposées qui se recouvrent, dans des gorges (14) qui sont décalées entre elles, que les deux plaques d'ajustage à deux couches (15) sont collées avec les guides d'ondes de lumière (2) qu'elles enserrent, que la surface de la tête d'écriture qui est située du côté du tambour, et qui comporte les extrémités de sortie de la lumière des guides d'ondes de lumière (2) est conformée et traitée, en fonction du rayon donné du tambour, de telle manière qu'elle représente une surface concave, à faible friction et représentant la surface latérale du tambour (1), avec un rayon augmenté d'une distance minimale entre les deux surfaces, que le côté de la tête d'écriture (6) qui est éloigné du tambour (1) et qui comporte les extrémités d'entrée de la lumière des guides d'ondes de lumière (12), est relié de telle façon à une ligne de source lumineuse (7) que l'émission d'une source lumineuse individuelle est dirigée sur l'extrémité d'entrée de lumière du guide d'ondes de lumière (2) qui lui est associée, que la ligne (7) de source de lumière est reliée à un dispositif de liaison, de préférence une réglette à enfichage, contenant les bornes de raccordement (8) nécessaires aux sources lumineuses, et que la constitution d'ensemble de la tête d'écriture (6) est assemblée avec un dispositif de fixation pour former un dispositif monolithique qui est de préférence enrobé de résine synthétique moulée.

3. Dispositif optique selon l'une des revendications précédentes, caractérisé par le fait que plusieurs têtes d'écriture individuelles (11) sont rassemblées de telle façon en une tête d'écriture multiple (12), que les têtes d'écriture individuelles (11) sont disposées suivant au moins deux couches séparées entre elles par des entretoises (10) constituées de préférence par une matière plastique, lesdites têtes d'écriture individuelles étant, dans chaque couche, disposées à une certaine distance l'une de l'autre alors que dans la disposition d'ensemble elles sont agencées de manière à se recouvrir sans exception.

4. Dispositif optique selon la revendication 3, caractérisé par le fait que la tête d'écriture multiple (12) possède une longueur qui est adaptée à la longueur des lignes prédéterminées des images et/ou du texte à tracer.

5. Dispositif optique selon la revendication 3 ou 4, caractérisé par le fait que la tête d'écriture multiple (12) comporte plusieurs couches, de manière que la totalité des extrémités de sortie de la lumière de tous les guides d'ondes de lumière (2) représentent au moins deux lignes de l'image concernée à tracer.

6. Dispositif optique selon l'une des revendications 3 à 5, caractérisé par le fait que les sources lumineuses sont excitées avec un décalage dans le temps suivant leur association aux guides d'ondes de lumière (2) et en fonction de la vitesse de rotation du tambour (1).

7. Dispositif optique selon la revendication 6, caractérisé par le fait que l'excitation, décalée dans le temps, des sources lumineuses concernées, est susceptible d'être commandée à l'aide d'un dispositif à micro-ordinateur ou à l'aide d'un microprocesseur.

8. Dispositif optique selon l'une des revendications 1 à 2, caractérisé par le fait que les plaques d'ajustage (3, 4, 15) sont réalisées comme plaques d'ajustage avec guidage (13) rétrécies, dans lesquelles les gorges (15) présentent, du côté qui est tourné vers le tambour (1), une distance minimale entre elles et, sur le côté qui est éloigné du tambour (1), une distance plus grande entre elles, en sorte que malgré un diamètre transversal plus grand d'une source lumineuse concernée, et comparativement au diamètre de la section transversale d'un guide d'ondes de lumière concerné (2), on peut obtenir une densité de guides d'ondes de lumière et, par voie de conséquence, une résolution maximale de l'information d'image ou de texte à transmettre.

9. Dispositif optique selon l'une des revendications 1 à 2, caractérisé par le fait que pour enserrer les guides d'ondes de lumière (2), on utilise respectivement deux plaques d'ajustage (3, 4, 15) à même structure de gorges et de même allure de celles-ci, les deux plaques étant superposées par leurs surfaces qui comportent les gorges.

10. Dispositif optique selon l'une des revendications 1 à 2, caractérisé par le fait que pour enserrer les guides d'ondes de lumière (2) on utilise respectivement une plaque à gorges (4) ayant une structure de gorges qui est adaptée, du point de vue de la profondeur, aux diamètres des guides d'ondes de lumière (2), et une plaque de couverture plane (5) disposée sur la plaque à gorges.

11. Dispositif optique selon l'une des revendications 1 à 2, caractérisé par le fait que les guides d'ondes de lumière (2) ont un profil d'indice en paliers.

12. Dispositif optique selon l'une des revendications 1 à 2, caractérisé par le fait que les guides d'ondes de lumière (2) possèdent un profil d'indice à gradient.

13. Dispositif optique selon l'une des revendications 1 à 8, caractérisé par le fait que les sources lumineuses sont réalisées sous la forme de lampes à incandescence.

14. Dispositif optique selon l'une des revendications 1 à 8, caractérisé par le fait que les sources lumineuses sont réalisées sous la forme de diodes à émission de lumière LED (9).

15. Dispositif optique selon l'une des revendications précédentes, caractérisé par le fait que les sources lumineuses sont réalisées sous la forme de diodes laser à semiconducteurs.

16. Dispositif optique selon l'une des revendications 1 à 8 et 14, caractérisé par le fait que les diodes à émission de lumière LED (9) sont intégrées, en plusieurs exemplaires, dans une ligne de sources lumineuses (7) à l'aide de la technologie des semiconducteurs sur une puce d'un matériau semiconducteur approprié.

17. Dispositif optique selon l'une des revendications 1 à 8 et 15, caractérisé par le fait que les diodes laser à semiconducteurs sont intégrées, en plusieurs exemplaires, suivant une ligne de sources lumineuses (7) à l'aide de la technologie à semiconducteurs sur une puce d'un matériau semiconducteur approprié.

18. Dispositif optique selon l'une des revendications 1 à 2 ou 8, caractérisé par le fait que le matériau semiconducteur est le Si.

19. Dispositif optique selon l'une des revendications 1 à 2 ou 8, caractérisé par le fait que le matériau semiconducteur est le GaAs.

20. Dispositif optique selon l'une des revendications 1 à 2 ou 8, caractérisé par le fait que le matériau semiconducteur est le GaP.

FIG 1

1

2

FIG 2

3

2

FIG 3

5

4

2

# FIG 4

# FIG 5

# FIG 6

# FIG 7

# FIG 8